# EUROPEAN PATENT SPECIFICATION

(11) **EP 2 640 936 B1**
(45) Date of publication and mention of the grant of the patent: **06.09.2017**
(21) Application number: 11805195.2
(22) Date of filing: 16.11.2011
(51) Int. Cl.: F01K 23/10, F22B 3/04, F22B 37/50, C02F 1/06, F22B 37/48, C02F 103/08

(54) **COMBINED CYCLE PLANT FOR ENERGY PRODUCTION AND METHOD FOR OPERATING SAID PLANT**
GUD-KRAFTWERK ZUR ENERGIEERZEUGUNG UND VERFAHREN ZUM BETRIEB DER ANLAGE
INSTALLATION À CYCLE COMBINÉ POUR PRODUCTION D'ÉNERGIE ET PROCÉDÉ DE FONCTIONNEMENT DE LADITE INSTALLATION

(30) Priority: 16.11.2010 IT MI20102121
(43) Date of publication of application: 25.09.2013
(73) Proprietor: Ansaldo Energia S.p.A., Genova (IT)
(72) Inventor: PRATICO', Ferdinando, I-16145 Genova (IT); PROVENZANO, Marco, I-16163 Genova (IT)
(74) Representative: Andreotti, Erika
(86) International application number: PCT/IB2011/055136
(87) International publication number: WO 2012/066490

(56) References cited:
- EP-A1- 0 981 014
- WO-A1-2005/068905
- US-B1- 6 269 626

## Description

### TECHNICAL FIELD

The present invention relates to a combined cycle plant for energy production and to a method for operating said plant.

In particular, the present invention relates to a plant for the production of electric energy or for the production of electric and thermal energy.

### BACKGROUND ART

A combined cycle plant for energy production generally comprises a gas turbine unit, a steam turbine unit and a boiler supplied with exhaust gases from the gas turbine unit and configured to produce steam to be supplied to the steam turbine unit. The boiler comprises at least a first evaporator at a first pressure level and at least a second evaporator at a second pressure level lower than the first pressure level.

Plants of known type are often provided with a draining circuit configured to drain tainted water from the first evaporator and/or the second evaporator in order to control the salt content of the water in the evaporators.

The quantity of tainted water drained from each evaporator in order to be analyzed (at most equal to 5% of the water flow rate which supplies the respective evaporator) is then sent to a rapid evaporation tank, also known as a "flash tank", which term will be used hereinafter. The flash tank is configured to produce steam and to reduce the water to atmospheric pressure. The produced steam is released into the atmosphere by means of a silencer, while the liquid portion remained in the flash tank is drained, cooled and finally dumped into a cesspool.

In plants of this type, therefore, the thermal energy associated to the water drained from the evaporators and the flow rate of said water are dissipated. In documents WO 2005/068905, US 6269626 and EP 2981014 are disclosed solutions wherein the tainted water is cleaned and reused or the heat of the tainted waster is exploited. However, in these solutions the plant efficiency is not optimized.

### DISCLOSURE OF INVENTION

An object of the present invention is therefore to make a combined cycle plant for energy production which is free from the prior art drawbacks described herein; in particular, it is an object of the invention to make a combined cycle plant for energy production characterised by better performance with respect to the performance of prior art plants.

In particular, it is an object of the present invention to increase the efficiency of the plant by increasing the supplied power, with the same consumption.

In accordance with these objects, the present invention relates to a combined cycle plant for energy production in accordance with claim 1.

A further object of the present invention is to provide a method for operating a combined cycle plant for energy production which is capable of increasing the efficiency of the plant by increasing the supplied power, with the same consumption.

In accordance with these objects, the present invention relates to a method for operating a combined cycle plant for energy production in accordance with claim 11.

### BRIEF DESCRIPTION OF THE DRAWINGS

Further features and advantages of the present invention will become apparent from the following description of a non-limiting embodiment thereof, with reference to the accompanying drawings, in which:
- figure 1 is a diagrammatic representation of the combined cycle plant for energy production according to the present invention;
- figure 2 is a view of a detail of the plant in figure 1;
- figure 3 is a view of a detail of the combined cycle plant in accordance with a second embodiment thereof.

### BEST MODE FOR CARRYING OUT THE INVENTION

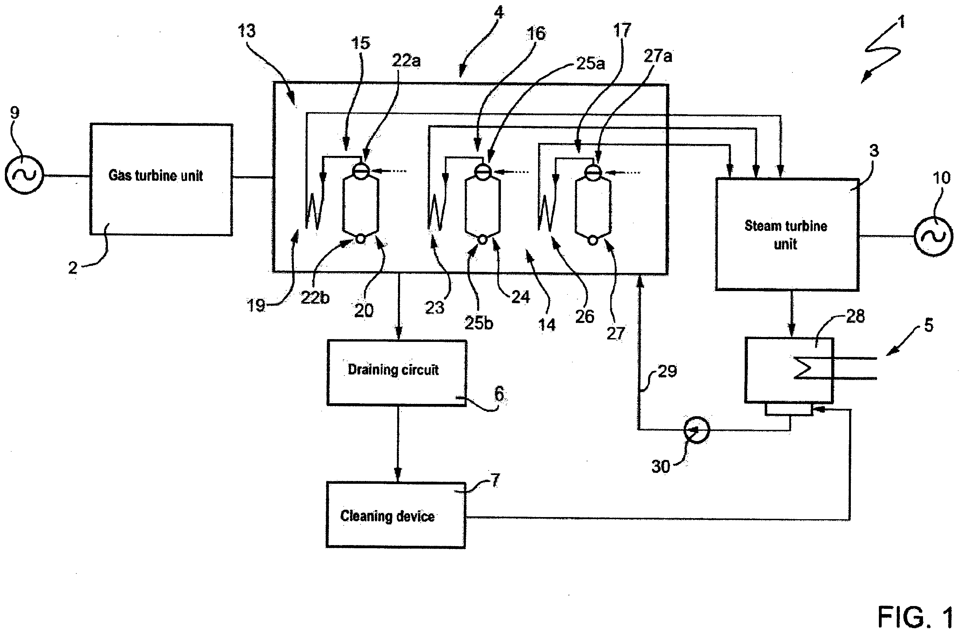

In figure 1, the reference numeral 1 indicates a combined cycle plant for energy production.

Plant 1 shown in figure 1 is preferably configured to produce only electric energy.

A variation (not shown) provides for plant 1 to be configured for the production of electric energy and thermal energy, useful, for example, in district heating applications.

Plant 1 comprises a gas turbine unit 2, a steam turbine unit 3, a boiler 4, a condenser assembly 5, a draining circuit 6 and a cleaning device 7.

Gas turbine unit 2 is the prime mover of the combined cycle plant 1 and can be powered with any type of fuel.

Gas turbine unit 2 is connected to a generator 9 and comprises a compressor, a combustion chamber and a gas turbine (not shown in the accompanying drawings). The gas turbine operates generator 9 in order to produce available electric energy.

Steam turbine unit 3 is coupled to a respective generator 10 and comprises a high-pressure steam turbine, a medium-pressure steam turbine and a low-pressure steam turbine (not shown in the accompanying drawings).

Boiler 4 salvages the residual heat of the combustion fumes produced by gas turbine unit 2 and produces steam to be supplied to steam turbine unit 3.

In particular, boiler 4 comprises a fumes flowing chamber 13, to which the exhaust fumes of gas turbine unit 2 flow, and a steam circuit 14 (shown only in part in the accompanying drawings for simplicity), supplied with demineralised water.

Steam circuit 14 extends within fumes flowing chamber 13, so as to take advantage of the heat of the hot fumes from gas turbine unit 2 in order to produce the steam to supply to the steam turbine unit 3.

In particular, in the example shown, steam circuit 14 comprises a high-pressure section 15, a medium-pressure section 16 and a low-pressure section 17.

High-pressure section 15 comprises a plurality of high-pressure thermal exchange banks 19 (only one shown for simplicity in the accompanying drawings), a high-pressure evaporator 20 and a de-evaporator (not shown for simplicity in the accompanying drawings), which comes into operation whenever the steam temperature is too high. High-pressure evaporator 22 is provided with an inlet 22a and an exhaust 22b. Tainted, salt-rich water flows into exhaust 22b.

The steam produced in high-pressure section 15 is sent to the high-pressure turbine of steam turbine unit 3.

Medium-pressure section 16 comprises a plurality of medium-pressure thermal exchange banks 23 (only one of which is shown for simplicity in the accompanying drawings), a medium-pressure evaporator 24 and a de-evaporator (not shown for simplicity in the accompanying drawings), which comes into operation whenever the steam temperature is too high. Medium-pressure evaporator 24 is provided with an inlet 25a and an exhaust 25b. Tainted, salt-rich water flows into exhaust 25b.

The steam produced in medium-pressure section 16 is sent to the medium-pressure turbine of the steam turbine unit 3.

Low-pressure section 17 comprises a plurality of low-pressure thermal exchange banks 26 (only one of which is shown for simplicity in the accompanying drawings), a low-pressure evaporator 27 and a de-evaporator (not shown for simplicity in the accompanying drawings), which comes into operation whenever the steam temperature is too high. The low-pressure evaporator is provided with an inlet 27a.

The steam produced in low-pressure section 17 is sent to the low-pressure turbine of the steam turbine unit 3.

The low-pressure 17, medium-pressure 16 and high-pressure 15 sections are furthermore connected to one another by means of conduits (not shown for simplicity in the accompanying drawings).

Condenser assembly 5 is configured to produce condensate from the steam from steam turbine unit 3 and to supply steam circuit 14 with water. Condenser assembly 5 comprises a condenser 28, a delivery branch 29, which connects condenser 28 to boiler 4 and a pump 30, configured to extract the condensate from condenser 28.

Draining circuit 6 is configured to drain water from high-pressure evaporator 20 and/or medium-pressure evaporator 24 so as to be able to carry out an analysis of the composition of the water that circulates in the evaporators themselves.

In particular, draining circuit 6 is configured to salvage the thermal energy of the drained water and to supply the drained water to cleaning device 7, which, as we will see in detail below, is configured to clean the tainted water so as to make it reusable within the steam circuit 14.

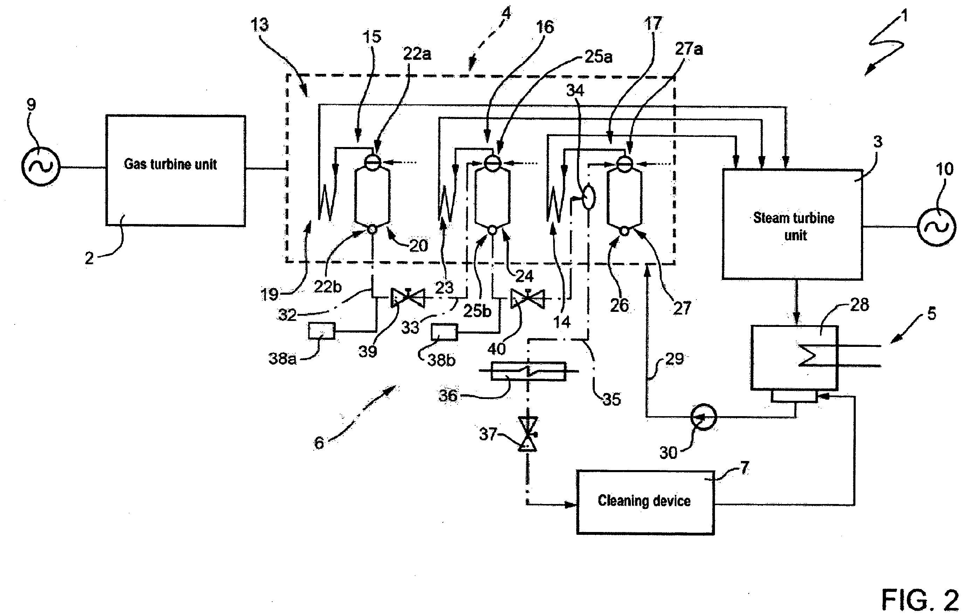

With reference to figure 2, draining circuit 6 (represented in figure 2 with a dash-dot line) comprises a first draining branch 32, a second draining branch 33, a flash tank 34, an exhaust conduit 35, a heat exchanger 36 and a regulating valve 37.

First draining branch 32 connects exhaust 22b of high-pressure evaporator 20 to inlet 25a of the medium-pressure evaporator 24 and is provided with a regulating valve 39. The first draining branch 32 is connected to an analyzing device 38a, configured to analyze the composition of the water that circulates in the evaporators themselves.

Preferably, first draining branch 32 drains about 1% of the water in circulation in high-pressure evaporator 20.

In conditions of saturation and at the normal operating pressure of high-pressure evaporator 20 (between 80 and 140 bar and preferably equal to 126 bar), the tainted water drained from high-pressure evaporator 20 undergoes a reduction in pressure as it passes through regulating valve 39. Indeed, the pressure of the tainted water is reduced to the pressure value present in medium-pressure evaporator 24 (between 20 and 40 bar and preferably equal to 33 bar).

The pressure drop undergone by the tainted water as it passes through regulating valve 39 determines a rapid evaporation of the tainted water. In other words, the tainted water undergoes the so-called "flash" process and is transformed partly into dry saturated steam at the pressure present in medium-pressure evaporator 24, and partly into saturated water at the pressure present in medium-pressure evaporator 24.

The quantity of steam which is produced during the passage through regulating valve 39 increases the steam flow which develops in medium-pressure evaporator 24. In this way, the power produced by steam turbine unit 3 increases with the same fuel consumption.

Second draining branch 33 connects exhaust 25b of medium-pressure evaporator 24 to inlet 27a of low-pressure evaporator 27 and is provided with a regulating valve 40.

Flash tank 34 is arranged along second draining branch 34. In particular, flash tank 34 is arranged downstream the regulating valve 40.

Preferably, second draining branch 33 drains about 1% of the water in circulation in medium-pressure evaporator 24.

The second draining branch is connected to an analyzing device 38b, configured to analyze the composition of the water which circulates in said evaporators.

In conditions of saturation and at the normal operating pressure of medium-pressure evaporator 24 (between 20 and 40 bar and preferably equal to 33 bar), the tainted water drained from medium-pressure evaporator 24 undergoes a reduction in pressure as it passes through regulating valve 40. Indeed, the pressure of the tainted water is reduced to the pressure value present in flash tank 34, which is connected to and at the same pressure of the low-pressure evaporator 27 (having a pressure of about 6 bar).

The tainted water therefore passes from a pressure of about 33 bar to a pressure of about 6 bar as it passes through valve 40.

The pressure drop undergone by the tainted water as it passes through regulating valve 40 determines a rapid evaporation of the tainted water. In other words, the tainted water undergoes the so-called "flash" process and is transformed, partly into dry saturated steam at the pressure present in flash tank 34 (equal to the pressure in low-pressure evaporator 27), and partly into saturated water at the pressure present in flash tank 34 (equal to the pressure in low-pressure evaporator 27).

The quantity of steam produced during the passage through regulating valve 40 therefore increases the steam flow which develops in low-pressure evaporator 27. In this way, the power produced by steam turbine unit 3 increases with the same fuel consumption.

The part of saturated water which is collected by flash tank 34 is piped into exhaust conduit 35, which connects flash tank 34 to cleaning device 7.

Heat exchanger 36 and regulating valve 37, respectively, are arranged along exhaust conduit 35. Heat exchanger 36 is configured to cool the saturated water collected by flash tank 34 in order to allow the cleaning action which will be carried out by cleaning device 7.

Cleaning device 7 is configured to clean the saturated water collected by flash tank 34 and make it reusable.

For example, cleaning device 7 is of the type described in patent application EP 1803689, of the applicant.

The water cleaned by cleaning device 7 is sent to condenser assembly 5. In particular, the water cleaned by cleaning device 7 is sent to delivery branch 29 downstream of condenser 28.

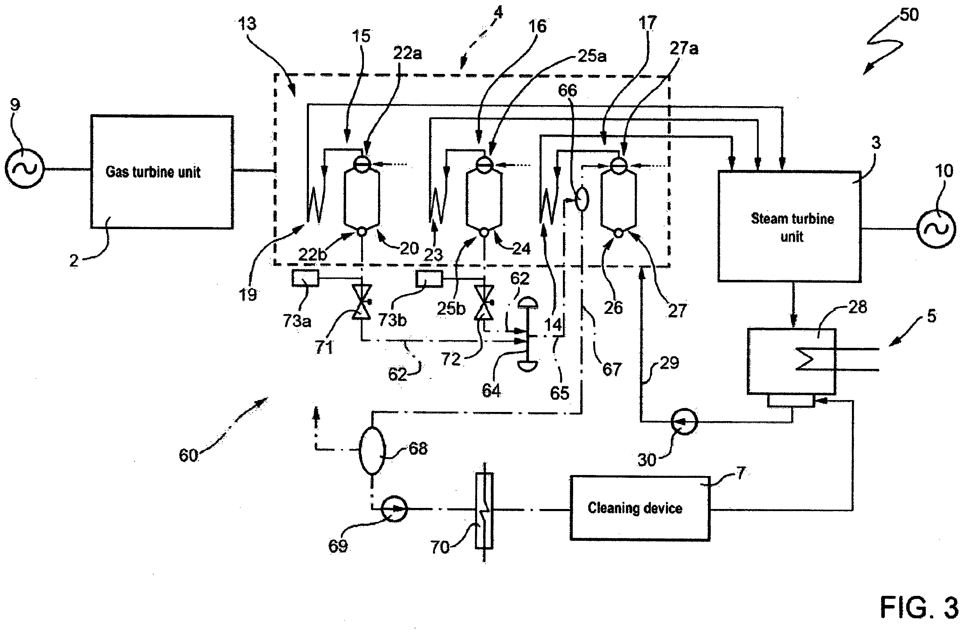

Figure 3 shows a plant 50 according to a second embodiment of the present invention, in which the same reference numerals of figures 1 and 2 are used to show like parts of the two embodiments.

In essence, plant 50 according to the second embodiment comprises a draining circuit 60 having a different configuration with respect to draining circuit 6 of plant 1 in figures 1 and 2.

Similarly to draining circuit 6, draining circuit 60 is configured to salvage the thermal energy of the drained water and to supply the drained water to cleaning device 7, which, as stated above, is configured to clean the tainted water so as to make it reusable within steam circuit 14.

Draining circuit 60 (represented in figure 3 with a dash-dot line) comprises a first draining branch 62, a second draining branch 63, a common conduit 64, a connecting branch 65, a flash tank 66, an exhaust conduit 67, a flash tank 68, a pump 69 and a heat exchanger 70.

First draining branch 62 connects exhaust 22b of high-pressure evaporator 20 to common conduit 64 and is provided with a regulating valve 71.

Second draining branch 62 connects exhaust 25b of medium-pressure evaporator 24 to common conduit 64 and is provided with a regulating valve 72.

First draining branch 62 is connected to a respective analyzing device 73a, configured to analyze the composition of the water which circulates in the evaporators themselves.

Second draining branch 63 is connected to a respective analyzing device 73b, configured to analyze the composition of the water which circulates in the evaporators themselves.

Common conduit 64 is connected to inlet 27b of low-pressure evaporator 27 by means of connecting channel 65, along which flash tank 66 is arranged.

Preferably, first draining branch 62 and second draining branch 63 drain about 1% of the water in circulation in high-pressure evaporator 20 and medium-pressure evaporator 24, respectively.

The tainted water drained from high-pressure evaporator 20 and medium-pressure evaporator 24 undergoes a reduction in pressure during the passage through regulating valves 71 and 72, respectively, similarly to what was described for valves 39 and 40 of the first embodiment.

Indeed, the pressure on common conduit 64 is equal to the pressure of flash tank 66, which, in turn, is at the same pressure as low-pressure evaporator 27 (having pressures of about 6 bar).

In essence, the tainted water undergoes the so-called "flash" process and is transformed partly into dry saturated steam at the pressure present in flash tank 66 (equal to the pressure in low-pressure evaporator 27), and partly into saturated water at the pressure present in flash tank 66 (equal to the pressure in the cylindrical body of low-pressure evaporator 27).

Therefore, the steam produced increases the steam flow which develops in low-pressure evaporator 27. In this way, the power produced by the steam turbine unit 3 increases with the same consumption.

The part of saturated water which is collected by flash tank 66 is piped into exhaust conduit 67, which connects flash tank 66 to cleaning device 7.

Flash tank 68, pump 69 and heat exchanger 70 are arranged, respectively, along exhaust conduit 67. Flash tank 68 determines a further evaporation of the tainted water. The steam produced by flash tank 68 is released into the atmosphere, while the saturated portion is pumped by means of pump 69 to heat exchanger 70.

Heat exchanger 70 is configured to cool the saturated water collected by flash tank 68 in order to improve the cleaning action which will be carried out by cleaning device 7.

Advantageously, plant 1 and 50 according to the present invention is characterized by an increased efficiency with respect to plants of known type.

In plants of known type, the tainted water drained from the evaporators of the boiler in order to control the quantity of salts is dumped into a cesspool and the thermal energy associated thereto is dissipated.

In plant 1, 50 according to the present invention, on the other hand, draining circuit 6 and 60 is configured so as to salvage the thermal energy of the tainted water drained from the evaporators of the boiler. Moreover, the tainted water drained from the evaporators of the boiler is subsequently cleaned and made reusable in order to supply the boiler.

Indeed, plant 1, 50 according to the present invention is configured so as to salvage part of the heat subtracted from the evaporators of the boiler in order to control the salt content. The heat is salvaged by transforming the drained water into steam, which will be supplied to the steam turbine in order to determine an increase of electric power.

The subsequent treatment of the tainted water allows a substantial salvage of all the water which, according to traditional techniques, is dumped into cesspools.

From the calculations carried out by the applicant, it emerges that, for an average continuous dumping value of about 1% and for 400 MW plants, the increase of electric power that can be produced by plant 1, 50 according to the present invention is about 150 kW with a reduction of about 3 kJ/kWh of specific consumption.

This leads to an appreciable increase in annual income for the plant administrator, quantifiable in tens of millions of euros.

Moreover, the plant that produces the demineralized water to supply to the boiler can be reduced in dimensions thanks to the fact that, during normal operation of the plant, the flow rate of water to be supplied to the boiler undergoes a reduction of 80%.

A further advantage of the invention is that it can be applied to combined cycle plants equipped with different types of heat salvage boilers. For example, the invention can be applied to boilers with an SH (Super-Heat)-type cycle or an RH (Re-Heat)-type cycle, or to boilers equipped with any type of cooling system (water-cooled condenser in open cycle or closed cycle on towers, air condenser, Heller-type condensers) or also without cooling system (e.g. in plants for the production of electric energy connected to desalination plants for the production of drinkable water from seawater).

Furthermore, the invention can be applied to combined cycle plants equipped with a heat salvage boiler having any number of evaporators or also equipped with a heat salvage boiler with and without afterburners.

Another advantage of the invention is that it can be applied to combined cycle plants which can be powered by any type of fuel.

Finally, it is evident that modifications and variations can be made to the plant and to the method described herein while remaining within the scope of the attached claims.

## Claims

1. Combined cycle plant (1) for energy production comprising:
- a gas turbine unit (2);
- a steam turbine unit (3);
- a boiler (4) supplied with exhaust gas from the gas turbine unit (2) and configured to produce steam to be supplied to the steam turbine unit (3); the boiler (4) comprising at least a first evaporator (20) at a first pressure level and at least a second evaporator (24, 27) at a second pressure level lower than the first pressure level;
- a draining circuit (6, 60) configured to drain tainted water from the first evaporator (20) and optionally also from the second evaporator (24); and
- a cleaning device (7) configured to clean the tainted water drained by the draining circuit (6) so as to make said tainted water reusable in the combined cycle plant (1); wherein the draining circuit (6) comprises a first draining branch (32, 62) for draining tainted water from the first evaporator (20) and a first regulating valve (39, 71) arranged along the first draining branch (32, 62); the plant being **characterized by** the fact that the first draining branch (32) connects the first evaporator (20) to the second evaporator (24, 27)

2. Plant according to claim 1, wherein the draining circuits (6, 60) is configured to salvage, at least in part, the thermal energy associated to the tainted water drained from the first evaporator (20) and optionally also from the second evaporator (24).

3. Plant according to claim 1 or 2, wherein the draining circuit (6, 60) is configured to convert, at least in part, the tainted water drained from the first evaporator (20) and optionally also from the second evaporator (24) in steam and supply the produced steam to the steam turbine unit (3).

4. Plant according to anyone of the foregoing wherein the draining circuit (6, 60) claims, wherein the draining circuit comprises a heat exchanger (36, 70) configured to cool the drained tainted water before supplying it to the cleaning device (7).

5. Plant according to anyone of the foregoing claims, wherein the draining circuit (6) comprises first regulating means (37) configured to regulate the tainted water flow rate to be supplied to the cleaning device (7).

6. Plant according to anyone of the foregoing claims, wherein the draining circuit (6) comprises second regulating means ( 40) configured to regulate the tainted water flow rate drained from at least the first evaporator (20) and the second evaporator (24).

7. Plant according to anyone of the foregoing claims, wherein the draining circuit(6) comprises a second draining branch (33) for draining tainted water from the second evaporator (24) and a second regulating valve (40) arranged along the second draining branch (33).

8. Plant according to claim 7, comprising a third evaporator (27) at a third pressure lower than the second pressure; the second draining branch (33) connecting the second evaporator (24) to the third evaporator (27).

9. Plant according to claim 8, wherein the second draining branch (33) comprises a flash tank (34), arranged downstream the second regulating valve (40) and configured to supply steam to the third evaporator (27).

10. Plant according to claim 9, wherein the draining circuit (6) comprises an exhaust conduit (35), which connects the flash tank (34) to the cleaning device (7).

11. Method for operating a combined cycle plant (1; 50) for energy production; the plant (1; 50) comprising:
- a gas turbine unit (2);
- a steam turbine unit (3);
- a boiler (4) supplied with exhaust gas from the gas turbine unit (2) and configured to produce steam to be supplied to the steam turbine unit (3) ; the boiler (4) comprising at least a first evaporator (20) at a first pressure level and at least a second evaporator (24, 27) at a second pressure level lower than the first pressure level;
the method comprising the steps of:
- draining tainted water from the first evaporator (20), and optionally also from the second evaporator (24), by means of a draining circuit (6; 60);
- cleaning the tainted water drained by the draining circuit (6; 60) by means of a cleaning device (7); the method being **characterised by** supplying the drained tainted water from the first evaporator (20) to the second evaporator (24, 27) by means of a first draining branch (32, 62) and a first regulating valve (39, 71) arranged along the first draining branch (32, 62).

12. Method according to claim 11, wherein the step of draining tainted water comprises the step of salvaging, at least in part, the thermal energy associated to the tainted water drained from the first evaporator (20) and optionally also from the second evaporator (24).

13. Method according to claim 12, wherein the step of salvaging at least in part, the thermal energy comprises the steps of:
- converting, at least in part, the tainted water drained from the first evaporator (20) and optionally also from the second evaporator (24) in steam; and
- supplying the produced steam to the steam turbine unit (3).

## Patentansprüche

1. GuD-Kraftwerk (1) zur Energieerzeugung, aufweisend:
- eine Gasturbineneinheit (2);
- eine Dampfturbineneinheit (3);
- einen Heizkessel (4), dem Abgas von der Gasturbineneinheit (2) zugeführt wird und der dazu ausgebildet ist, Dampf zu erzeugen, welcher der Dampfturbineneinheit (3) zuzuführen ist; wobei der Heizkessel (4) zumindest einen ersten Verdampfer (20) bei einem ersten Druckpegel und zumindest einen zweiten Verdampfer (24, 27) bei einem zweiten Druckpegel, der niedriger ist als der erste Druckpegel, aufweist,
- einen Drainagekreislauf (6, 60), der dazu ausgebildet ist, Schmutzwasser von dem ersten Verdampfer (20) und optional ebenso von dem zweiten Verdampfer (24) abzulassen; und
- eine Reinigungsvorrichtung (7), die dazu ausgebildet ist, das Schmutzwasser, das von dem Drainagekreislauf (6) abgelassen wird, zu reinigen, um so das Schmutzwasser in dem GuD-Kraftwerk (1) wiederverwendbar zu machen; wobei der Drainagekreislauf (6) einen ersten Drainagezweig (32, 62) zum Ablassen von Schmutzwasser von dem ersten Verdampfer (20) und ein erstes Regelventil (39, 71), das entlang des ersten Drainagezweiges (32, 62) angeordnet ist, aufweist; wobei das Kraftwerk **dadurch gekennzeichnet ist, dass** der erste Drainagezweig (32) den ersten Verdampfer (20) mit dem zweiten Verdampfer (24, 27) verbindet.

2. Kraftwerk nach Anspruch 1, wobei der Drainagekreislauf (6, 60) dazu ausgebildet ist, zumindest teilweise die thermische Energie, die im Zusammenhang mit dem Schmutzwasser steht, das von dem ersten Verdampfer (20) und optional ebenso von dem zweiten Verdampfer (24) abgelassen wird, wiederzugewinnen.

3. Kraftwerk nach Anspruch 1 oder 2, wobei der Drainagekreislauf (6, 60) dazu ausgebildet ist, zumindest teilweise das Schmutzwasser, das von dem ersten Verdampfer (20) und optional ebenso von dem zweiten Verdampfer (24) abgelassen wird, in Dampf umzuwandeln und den erzeugten Dampf der Dampfturbineneinheit (3) zuzuführen.

4. Kraftwerk nach einem der vorhergehenden Ansprüche, wobei der Drainagekreislauf (6, 60) einen Wärmetauscher (36, 70) aufweist, der dazu ausgebildet ist, das abgelassene Schmutzwasser zu kühlen, bevor es der Reinigungsvorrichtung (7) zugeführt wird.

5. Kraftwerk nach einem der vorhergehenden Ansprüche, wobei der Drainagekreislauf (6) ein erstes Regelmittel (37) aufweist, das dazu ausgebildet ist, die Schmutzwasserflussrate zu regeln, die der Reinigungsvorrichtung (7) zugeführt wird.

6. Kraftwerk nach einem der vorhergehenden Ansprüche, wobei der Drainagekreislauf (6) ein zweites Regelmittel (40) aufweist, das dazu ausgebildet ist, die Schmutzwasserflussrate, die von mindestens dem ersten Verdampfer (20) und dem zweiten Verdampfer (24) abgelassen wird, zu regeln.

7. Kraftwerk nach einem der vorhergehenden Ansprüche, wobei der Drainagekreislauf (6) einen zweiten Drainagezweig (33) zum Ablassen von Schmutzwasser von dem zweiten Verdampfer (24) und ein zweites Regelventil (40), das entlang dem zweiten Drainagezweig (33) angeordnet ist, aufweist.

8. Kraftwerk nach Anspruch 7, aufweisend einen dritten Verdampfer (27) bei einem dritten Druckpegel, der geringer als der zweite Druckpegel ist, wobei der zweite Drainagezweig (33) den zweiten Verdampfer (24) mit dem dritten Verdampfer (27) verbindet.

9. Kraftwerk nach Anspruch 8, wobei der zweite Drainagezweig (33) einen Entspannungstank (34) aufweist, der stromabwärts des zweiten Regelventils (40) angeordnet und dazu ausgebildet ist, Dampf dem dritten Verdampfer (27) zuzuführen.

10. Kraftwerk nach Anspruch 9, wobei der Drainagekreislauf (6) eine Abgasleitung (35) aufweist, die den Entspannungstank (34) mit der Reinigungsvorrichtung (7) verbindet.

11. Verfahren zum Betreiben eines GuD-Kraftwerkes (1; 50) zur Energieerzeugung; wobei das Kraftwerk (1; 50) aufweist:
- eine Gasturbineneinheit (2);
- eine Dampfturbineneinheit (3);
- einen Heizkessel (4), dem Abgas von der Gasturbineneinheit (2) zugeführt wird und der dazu ausgebildet ist, Dampf zu erzeugen, welcher der Dampfturbineneinheit (3) zuzuführen ist; wobei der Heizkessel (4) zumindest einen ersten Verdampfer (20) bei einem ersten Druckpegel und zumindest einen zweiten Verdampfer (24, 27) bei einem zweiten Druckpegel, der niedriger als der erste Druckpegel ist, aufweist;
wobei das Verfahren die Schritte aufweist:
- Ablassen von Schmutzwasser von dem ersten Verdampfer (20) und optional ebenso von dem zweiten Verdampfer (24) mithilfe eines Drainagekreislaufes (6; 60);
- Reinigen des Schmutzwassers, das von dem Drainagekreislauf (6; 60) abgelassen wird, mithilfe einer Reinigungsvorrichtung (7);
wobei das Verfahren durch Zuführen des abgelassenen Schmutzwassers von dem ersten Verdampfer (20) zu dem zweiten Verdampfer (24, 27) mithilfe eines ersten Drainagezweigs (32, 62) und eines ersten Regelventils (39, 71), das entlang des ersten Drainagezweigs (32, 62) angeordnet ist, gekennzeichnet ist.

12. Verfahren nach Anspruch 11, wobei der Schritt des Ablassens von Schmutzwasser den Schritt des Wiedergewinnens von zumindest einem Teil der thermischen Energie, die im Zusammenhang mit dem Schmutzwasser steht, das von dem ersten Verdampfer (20) und optional ebenso von dem zweiten Verdampfer (24) abgelassen wird, aufweist.

13. Verfahren nach Anspruch 12, wobei der Schritt des Wiedergewinnens von zumindest einem Teil der thermischen Energie die Schritte aufweist:
- Umwandeln zumindest eines Teils des Schmutzwassers, das von dem ersten Verdampfer (20) und optional ebenso von dem zweiten Verdampfer (24) abgelassen wird, in Dampf; und
- Zuführen des erzeugten Dampfs der Dampfturbineneinheit (3).

## Revendications

1. Installation à cycle combiné (1) pour production d'énergie comprenant :
- une unité turbine à gaz (2) ;
- une unité turbine à vapeur (3) ;
- une chaudière (4) alimentée en gaz d'échappement à partir de l'unité turbine à gaz (2) et configurée pour produire de la vapeur devant être fournie à l'unité turbine à vapeur (3) ; la chaudière (4) comprenant au moins un premier évaporateur (20) à un premier niveau de pression et au moins un deuxième évaporateur (24, 27) à un deuxième niveau de pression inférieur au premier niveau de pression ;
- un circuit de drainage (6, 60) configuré pour drainer de l'eau contaminée à partir du premier évaporateur (20) et éventuellement également à partir du deuxième évaporateur (24) ; et
- un dispositif de nettoyage (7) configuré pour nettoyer l'eau contaminée drainée par le circuit de drainage (6) de sorte à rendre ladite eau contaminée réutilisable dans l'installation à cycle combiné (1) ; dans lequel le circuit de drainage (6) comprend une première branche de drainage (32, 62) pour drainer l'eau contaminée à partir du premier évaporateur (20) et une première vanne de réglage (39, 71) agencée le long de la première branche de drainage (32, 62) ;
l'installation étant **caractérisée par le fait que** la première branche de drainage (32) relie le premier évaporateur (20) au deuxième évaporateur (24, 27).

2. Installation selon la revendication 1, dans laquelle le circuit de drainage (6, 60) est configuré pour récupérer, au moins en partie, l'énergie thermique associée à l'eau contaminée drainée à partir du premier évaporateur (20) et éventuellement également à partir du deuxième évaporateur (24).

3. Installation selon la revendication 1 ou 2, dans laquelle le circuit de drainage (6, 60) est configuré pour convertir, au moins en partie, l'eau contaminée drainée à partir du premier évaporateur (20) et éventuellement également à partir du deuxième évaporateur (24) en vapeur et fournir la vapeur produite à l'unité turbine à vapeur (3).

4. Installation selon l'une quelconque des revendications précédentes, dans laquelle le circuit de drainage (6, 60) comprend un échangeur de chaleur (36, 70) configuré pour refroidir l'eau contaminée drainée avant de la fournir au dispositif de nettoyage (7).

5. Installation selon l'une quelconque des revendications précédentes, dans laquelle le circuit de drainage (6) comprend des premiers moyens de régulation (37) configurés pour réguler le débit d'eau contaminée devant être fourni au dispositif de nettoyage (7).

6. Installation selon l'une quelconque des revendications précédentes, dans laquelle le circuit de drainage (6) comprend des seconds moyens de régulation (40) configurés pour réguler le débit d'eau contaminée drainé à partir d'au moins le premier évaporateur (20) et le deuxième évaporateur (24).

7. Installation selon l'une quelconque des revendications précédentes, dans laquelle le(s) circuit(s) de drainage comprend/comprennent une seconde branche de drainage (33) pour drainer l'eau contaminée à partir du second évaporateur (24) et un second robinet de réglage (40) agencé le long de la seconde branche de drainage (33).

8. Installation selon la revendication 7, comprenant un troisième évaporateur (27) à une troisième pression inférieure à la deuxième pression ; la seconde branche de drainage (33) reliant le deuxième évaporateur (24) au troisième évaporateur (27).

9. Installation selon la revendication 8, dans laquelle la seconde branche de drainage (33) comprend un réservoir de détente (34), agencé en aval de la seconde vanne de réglage (40) et configuré pour fournir de la vapeur au troisième évaporateur (27).

10. Installation selon la revendication 9, dans laquelle le circuit de drainage (6) comprend un conduit d'échappement (35), qui relie le réservoir de détente (34) au dispositif de nettoyage (7).

11. Procédé de fonctionnement d'une installation à cycle combiné (1 ; 50) pour la production d'énergie ; l'installation (1 ; 50) comprenant :
- une unité turbine à gaz (2) ;
- une unité turbine à vapeur (3) ;
- une chaudière (4) alimentée en gaz d'échappement à partir de l'unité turbine à gaz (2) et configurée pour produire de la vapeur devant être fournie à l'unité turbine à vapeur (3) ; la chaudière (4) comprenant au moins un premier évaporateur (20) à un premier niveau de pression et au moins un deuxième évaporateur (24, 27) à un deuxième niveau de pression inférieur au premier niveau de pression ;
le procédé comprenant les étapes suivantes :
- le drainage d'eau contaminée à partir du premier évaporateur (20) et éventuellement également à partir du deuxième évaporateur (24), au moyen d'un circuit de drainage (6 ; 60) ;
- le nettoyage de l'eau contaminée drainée par le circuit de drainage (6 ; 60) au moyen d'un dispositif de nettoyage (7) ;
le procédé étant **caractérisé par** la fourniture de l'eau contaminée drainée à partir du premier évaporateur (20) au deuxième évaporateur (24, 27) au moyen d'une première branche de drainage (32, 62) et d'une première vanne de réglage (39, 71) agencée le long de la première branche de drainage (32, 62).

12. Procédé selon la revendication 11, dans lequel l'étape de drainage d'eau contaminée comprend l'étape de récupération, au moins en partie, de l'énergie thermique associée à l'eau contaminée drainée à partir du premier évaporateur (20) et éventuellement également à partir du deuxième évaporateur (24).

13. Procédé selon la revendication 12, dans lequel l'étape de récupération, au moins en partie, de l'énergie thermique comprend les étapes suivantes :
- la conversion, au moins en partie, de l'eau contaminée drainée à partir du premier évaporateur (20) et éventuellement également à partir du deuxième évaporateur (24) en vapeur ; et
- la fourniture de la vapeur produite à l'unité turbine à vapeur (3).
